# EUROPÄISCHE PATENTANMELDUNG

(11) **EP 1 531 300 A2**
(43) Veröffentlichungstag der Anmeldung: **18.05.2005**
(21) Anmeldenummer: 04025711.5
(22) Anmeldetag: 29.10.2004
(51) Int. Cl.: F17C 3/04

(54) **Speicherbehälter für kryogene Medien**

(30) Priorität: 14.11.2003 DE 10353382
(71) Anmelder: Linde Aktiengesellschaft, 65189 Wiesbaden (DE)
(72) Erfinder: Reese, Wilfried-Henning, 85716 Unterschleissheim (DE)
(74) Vertreter: Zahn, Christoph

(57) **Zusammenfassung**

Es wird ein Speicherbehälter, insbesondere ein Speicherbehälter für tiefkalte Flüssigkeiten, vorzugsweise für flüssigen Wasserstoff, aufweisend einen Außenbehälter, wenigstens einen Innenbehälter, eine zwischen dem Außenbehälter und dem oder den Innenbehältem angeordnete, wenigstens eine metallische Schicht aufweisende Isolation sowie wenigstens eine Befüll- und/oder Entnahmeleitung beschrieben.

Erfindungsgemäß steht die oder wenigstens eine der Befüll- und/oder Entnahmeleitungen mit der oder wenigstens einer der metallischen Schichten der Isolation in direktem und/oder indirektem Wärmekontakt.

## Beschreibung

Die Erfindung betrifft einen Speicherbehälter, insbesondere einen Speicherbehälter für tiefkalte Flüssigkeiten, vorzugsweise für flüssigen Wasserstoff, aufweisend einen Außenbehälter, wenigstens einen Innenbehälter, eine zwischen dem Außenbehälter und dem oder den Innenbehältem angeordnete, wenigstens eine metallische Schicht aufweisende Isolation sowie wenigstens eine Befüll- und/oder Entnahmeleitung.

Im Folgenden werden bei den Bezeichnungen spezieller kryogener Medien entsprechend ihrem Aggregatzustand die Buchstaben "G" für "gasförmig" und "L" für "flüssig" bzw. "liquid" vorangestellt; also z. B. GH₂ bzw. LH₂ für gasförmigen bzw. flüssigen Wasserstoff.

Insbesondere Wasserstoff gewinnt gegenwärtig durch den steigenden Energiebedarf und das gestiegene Umweltbewusstsein als Energieträger zunehmend an Bedeutung. So werden bereits Lastkraftwagen, Busse sowie Personenkraftwagen mittels mit Wasserstoff-betriebenen Motoren bzw. Brennstoffzellen angetrieben. Darüber hinaus sind erste Versuche im Gange, Flugzeuge mit den genannten Medien anzutreiben.

Die Speicherung des Wasserstoffs "an Bord" der oben genannten Verkehrsmittel ist dabei in flüssiger Form am sinnvollsten. Zwar muss der Wasserstoff dazu auf etwa 21 K abgekühlt und auf dieser Temperatur gehalten werden - was nur durch entsprechende Isoliermaßnahmen an den Speicherbehältern bzw. -tanks realisiert werden kann -, doch ist eine Speicherung in gasförmigem Zustand aufgrund der geringen Dichte von GH₂ in der Regel in den obengenannten Verkehrsmitteln ungünstiger, da die Speicherung hierbei in großvolumigen und schweren Speicherbehältern bei hohen Drücken erfolgen muss.

Wird aus derartigen Speicherbehältern über einen längeren Zeitraum kein Medium entnommen, so kommt es im Inneren des Innenbehälters aufgrund des nicht zu verhindernden Wärmeeinfalles aus der Umgebung auf den Innenbehälter in dem in ihm gelagerten Medium zu einem Temperatur- und Druckanstieg. Entsprechend der Druckauslegung des Innenbehälters muss dann von Zeit zu Zeit gasförmiges Medium über eine Befüll- und/oder Entnahmeleitung - in der beispielsweise ein Überdruckventil vorgesehen ist - aus dem Speicherbehälter abgelassen bzw. abgeblasen werden. Ist der Speicherbehälter in einem Kraftfahrzeug vorgesehen, so geht diese Menge des gasförmigen Mediums ungenutzt verloren, wenn nicht eine zusätzliche Speichervorrichtung, wie bspw. ein Metallhydridspeicher, für die abzublasende Mediummenge vorgesehen ist.

Herkömmliche Speicherbehälter für flüssigen Wasserstoff ermöglichen Standzeiten von zwei bis drei Tagen, bevor es zu einem Abdampfen und damit Verlust an gasförmigem Wasserstoff kommt. Die Akzeptanz von Wasserstoff als Energieträger - insbesondere bei Personenkraftwagen - wird u. a. auch von der möglichen Länge der Standzeit eines Personenkraftwagens abhängen. Ein Abblasen von Wasserstoff nach zwei bis drei Tagen wird vom Kunden sicherlich nicht akzeptiert werden.

Es wurde bereits vorgeschlagen, innerhalb des Zwischenraumes gattungsgemäßer Speicherbehälter in einer bestimmten Temperaturebene ein Aluminium- oder Kupferschild, das den Innenbehälter im Regelfall vollständig umgibt, anzuordnen und thermisch mit einer Entnahmeleitung, über die das verdampfte kryogene Medium aus dem Innenbehälter abgezogen wird, zu verpunkten. Dieses Aluminium- oder Kupferschild wird dann bei jedem Abblasen von kryogenem Medium durch das abströmende kryogene Medium (wieder) gekühlt. Der bis zur derjenigen Temperaturebene, auf der das Aluminium- oder Kupferschild angeordnet ist, aus der Umgebung einfallende Wärmestrom wird durch die Anwärmung des abzublasenden kryogenen Mediums von diesem aufgenommen und wieder nach außen geführt. Der Wärmestrom auf den Innenbehälter kann dadurch bereits wesentlich verringert werden. Im Prinzip können auch mehrere Aluminium- oder Kupferschilde vorgesehen werden, wodurch die Isolationswirkung weiter verbessert wird. Der konstruktive Aufwand für derartige Speicherbehälter ist jedoch erheblich.

Aufgabe der vorliegenden Erfindung ist es, einen gattungsgemäßen Speicherbehälter anzugeben, bei dem der Wärmeeinfall auf das in ihm gespeicherte Medium reduziert wird und der mit einfachen Mitteln eine deutliche Verringerung der Menge an abzublasendem Medium und damit einhergehend eine Verlängerung der Standzeiten ermöglicht.

Zur Lösung dieser Aufgabe wird ein Speicherbehälter vorgeschlagen, der dadurch gekennzeichnet ist, dass die oder wenigstens eine der Befüll- und/oder Entnahmeleitungen mit der oder wenigstens einer der metallischen Schichten der Isolation in direktem und/oder indirektem Wärmekontakt steht.

Die Isolation von Speicherbehältem, die der Speicherung kryogener Flüssigkeiten bzw. Medien dienen, wird im Regelfall durch eine so genannte Superisolation erreicht. Diese besteht aus mehreren Schichten dünner Aluminiumfolien und/oder Aluminiumbedampfter Folien mit einem dazwischen liegenden Glasgewebe oder einer dazwischen liegenden Glasvliesschicht. Das Glasgewebe bzw. die Glasvliesschicht verhindern, dass sich die Aluminiumfolien und/oder Aluminium-bedampften Folien berühren und so einen thermischen Kurzschluss auslösen.

Erfindungsgemäß steht nunmehr die oder wenigstens eine der Befüll- und/oder Entnahmeleitung mit wenigstens einer der metallischen Schichten der Isolation in Wärmekontakt. Anstelle der bisher verwendeten Aluminium- oder Kupferschilde dienen nunmehr die vorhandenen metallischen Schichten der Isolation als Schilde. Herkömmlich Superisolationen weisen im Regelfall zwischen 30 und 80 Metallschichten auf, so dass jede davon als ein einzelnes Schild wirken kann. Wird eine Befüll- und/oder Entnahmeleitung mit mehreren der metallischen Schichten in Wärmekontakt gebracht, so muss jedes Schild nurmehr einen Bruchteil der Wärme ableiten, die bisher - bei der Verwendung eines einzelnen Aluminium- oder Kupferschildes - von einem einzigen Schild abgeleitet werden musste.

Die thermische Verbindung zwischen der oder den Befüll- und/oder Entnahmeleitungen sowie der und den metallischen Schichten der Isolation kann entweder direkt und/oder indirekt ausgebildet sein. Ein direkter Wärmekontakt kann beispielsweise mittels eines Metallklebebandes, eines Wärmeleitklebers und/oder einer Wärmeleitpaste erfolgen. Aber auch mittels eines indirekten Wärmekontaktes - also mittels der Übertragung der Wärmeenergie durch Strahlung - wird ein ausreichender Übertrag der benötigten Kühlenergie von der Befüll- und/oder Entnahmeleitung auf die metallische(n) Schicht(en) bewirkt.

Mittels der Erfindung wird nunmehr erreicht, dass die abzublasende Menge an verdampftem kryogenen Medium soweit reduziert bzw. vemachlässigbar gering wird, dass dieser vorbeschriebene Nachteil der Akzeptanz, insbesondere des Mediums Wasserstoff, nicht länger entgegen stehen sollte. Wird nunmehr in einem Kraftfahrzeug, das einen erfindungsgemäßen Speicherbehälter aufweist, bspw. zusätzlich ein Metallhydridspeicher vorgesehen, so kann mit diesem die geringe Menge an abzublasendem Medium aufgefangen und gespeichert werden.

Im Prinzip sind eine Vielzahl von Konfigurationen zwischen der oder den metallischen Schichten und der oder den Befüll- und/oder Entnahmeleitungen denkbar. So kann beispielsweise lediglich jede zweite oder dritte metallische Schicht mit einer Befüll- und/oder Entnahmeleitung verbunden werden; es können aber beispielsweise auch mehrere Befüll- und/oder Entnahmeleitungen mit mehreren metallischen Schicht in Wärmekontakt gebracht werden.

Den erfindungsgemäßen Speicherbehälter weiterbildend wird vorgeschlagen, dass bei denjenigen Speicherbehälterkonstruktionen, bei denen der oder die Innenbehälter über eine Halterung mit dem Außenbehälter verbunden sind, die oder wenigstens eine der Befüll- und/oder Entnahmeleitungen mit der Halterung in direktem und/oder indirektem Wärmekontakt steht.

Mittels dieser vorteilhaften Ausgestaltung des erfindungsgemäßen Speicherbehälters wird erreicht, dass auch die den oder die Innenbehälter mit dem Außenbehälter verbindende Halterung durch abzublasendes kryogenes Medium gekühlt wird, wodurch der Wärmeeinfall über die Halterung auf den oder die Innenbehälter ebenfalls verringert wird.

Gemäß einer vorteilhaften Ausgestaltung des erfindungsgemäßen Speicherbehälters beträgt die Dicke der metallischen Schicht(en), die mit wenigstens einer der Befüll- und/oder Entnahmeleitungen in Wärmekontakt steht bzw. stehen, 0,006 bis 0,15 mm, insbesondere 0,01 bis 0,05 mm

Während die bisher verwendeten Aluminium- oder Kupferschilde eine Dicke zwischen 0,1 und 0,3 mm aufweisen, können nunmehr wesentlich geringere Dicken realisiert werden: dies hat zur Folge, dass standardmäßige Isolationen bzw. Isolationssysteme zur Anwendung kommen können.

Ein weiterer aus der Erfindung resultierender Vorteil besteht darin, dass - sofern separate Leitungen für das Abblasen des verdampften kryogenen Mediums aus dem Innenbehälter vorgesehen sind - diese mit einem geringeren Durchmesser ausgeführt werden können, da sich die Menge an abzublasendem Medium bei dem erfindungsgemäßen Speicherbehälter gegenüber den zum Stand der Technik zählenden Speicherbehälterkonstruktionen wesentlich verringert. Durch die Realisierung dünnerer Leitungen können diese bei der Herstellung des erfindungsgemäßen Speicherbehälters mit der Isolation aufgebracht bzw. (auf)gewickelt werden. Üblicherweise erfolgt das Aufbringen der Isolation durch ein Aufwickeln der einzelnen Schichten auf den (langsam) rotierenden Innenbehälter.

Sofern mehrere Leitungen mit der oder den metallischen Schichten der Isolation in Wärmekontakt stehen, empfiehlt es sich darüber hinaus, diese Leitungen derart mit den einzelnen metallischen Schichten in Wärmekontakt zu bringen, dass die Wärmeverteilung in den einzelnen metallischen Schichten möglichst homogen ist.

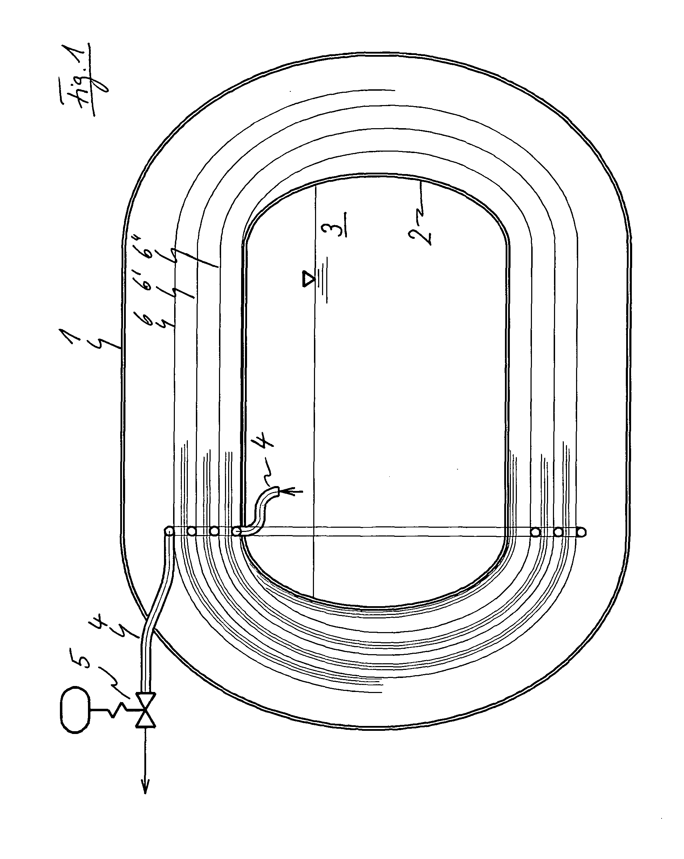

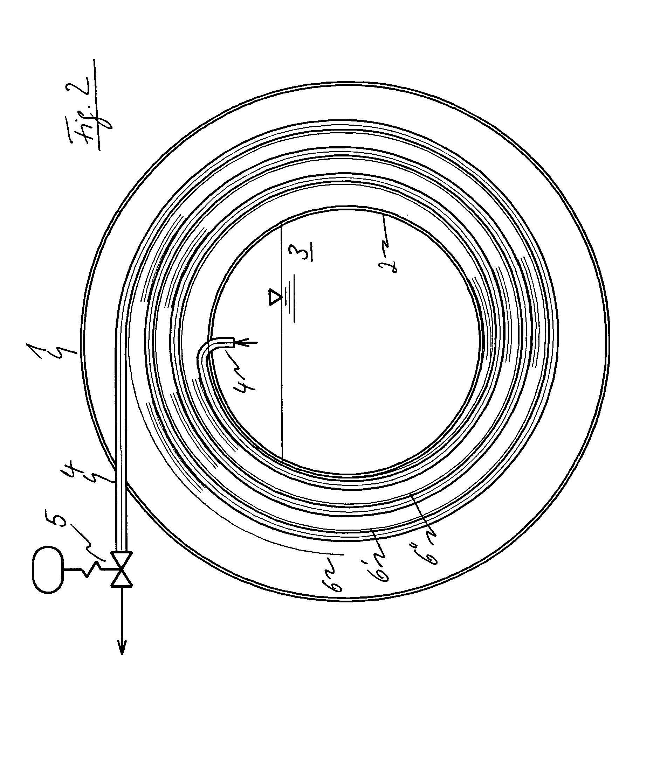

Der erfindungsgemäße Speicherbehälter sowie weitere Ausgestaltungen desselben, die Gegenstände der abhängigen Patentansprüche darstellen, seien im Folgenden anhand des in den Figuren 1 und 2 dargestellten Ausführungsbeispieles näher erläutert.

Hierbei zeigen die Figuren 1 und 2 in schematisierter Form zwei seitliche Schnittdarstellungen durch einen Speicherbehälter für tiefkalte Flüssigkeiten, wie beispielsweise flüssigen Wasserstoff.

Ein derartiger Speicherbehälter - wie er beispielsweise in mit flüssigem Wasserstoff betriebenen Kraftfahrzeugen zum Einsatz kommt - weist einen Außenbehälter 1, einen Innenbehälter 2, in dem sich das zu speichernde Medium 3 befindet, und mehrere zwischen dem Außenbehälter 1 und dem Innenbehälter 2 angeordnete metallische Schichten 6, 6', 6", ... auf; letztere bilden die erforderliche (Super)Isolation.

Der Übersichtlichkeit halber sind in den Figuren 1 und 2 die Befüll- und Entnahmeleitungen nicht dargestellt. Es sei betont, dass es sich hierbei um separate Leitungen oder um eine einzige Leitung, die sowohl dem Befüllen als auch Entleeren des Speicherbehälters dient, handeln kann.

Ferner weisen derartige Speicherbehälter im Regelfall eine Ab- bzw. Überströmleitung 4 auf; eine Ab- bzw. Überströmleitung sei nachfolgend als eine Entnahmeleitung anzusehen. Außerhalb des Außenbehälters 1 ist in dieser Überströmleitung 4 ein Sicherheitsventil 5 angeordnet, welches bspw. bei Überschreiten eines eingestellten Schwellendruckwertes automatisch öffnet und so ein Entlasten des Speicherbehälters, insbesondere des Innenbehälters 2, ermöglicht.

Erfindungsgemäß steht die Überströmleitung 4 nunmehr mit den vorgenannten metallischen Schichten 6, 6', 6", ... in Wärmekontakt. Wird somit Wasserstoff über die Überströmleitung 4 - wie durch die Pfeile dargestellt - entnommen, werden die mit der Überströmleitung 4 in Wärmekontakt stehenden metallischen Schichten 6, 6', 6", ... (wieder) gekühlt.

Auch die in den Figuren 1 und 2 nicht dargestellten Befüll- und Entnahmeleitungen können mit den metallischen Schichten der Isolation in direktem und/oder indirektem Wärmekontakt stehen. Sofern mehrere Befüll- und/oder Entnahmeleitungen vorgesehen sind, steht erfindungsgemäß wenigstens eine der Befüll- und/oder Entnahmeleitungen mit den metallischen Schichten der Isolation in direktem und/oder indirektem Wärmekontakt.

## Patentansprüche

1. Speicherbehälter, insbesondere Speicherbehälter für tiefkalte Flüssigkeiten, vorzugsweise für flüssigen Wasserstoff, aufweisend einen Außenbehälter, wenigstens einen Innenbehälter, eine zwischen dem Außenbehälter und dem oder den Innenbehältem angeordnete, wenigstens eine metallische Schicht aufweisende Isolation sowie wenigstens eine Befüll- und/oder Entnahmeleitung, **dadurch gekennzeichnet, dass** die oder wenigstens eine der Befüll- und/oder Entnahmeleitungen mit der oder wenigstens einer der metallischen Schichten der Isolation in direktem und/oder indirektem Wärmekontakt steht.

2. Speicherbehälter nach Anspruch 1, wobei der oder die Innenbehälter über eine Halterung mit dem Außenbehälter verbunden sind, **dadurch gekennzeichnet, dass** die oder wenigstens eine der Befüll- und/oder Entnahmeleitungen mit der Halterung in direktem und/oder indirektem Wärmekontakt steht.

3. Speicherbehälter nach Anspruch 1 oder 2, **dadurch gekennzeichnet, dass** die Dicke der metallischen Schicht(en), die mit wenigstens einer der Befüll- und/oder Entnahmeleitungen in Wärmekontakt steht bzw. stehen, 0,006 bis 0,15 mm, insbesondere 0,01 bis 0,05 mm beträgt bzw. betragen.

4. Verwendung eines Speicherbehälters nach einem der vorhergehenden Ansprüche als ortsbeweglicher Speicherbehälter, insbesondere als Speicherbehälter für Kraftfahrzeuge.
